# EUROPEAN PATENT SPECIFICATION

(11) **EP 4 386 962 B1**
(45) Date of publication and mention of the grant of the patent: **14.01.2026**
(21) Application number: 23207246.2
(22) Date of filing: 01.11.2023
(51) Int. Cl.: H01M 50/403, H01M 50/446, H01M 50/451

(54) **SEPARATOR FOR SECONDARY BATTERY, SECONDARY BATTERY INCLUDING THE SAME, AND MANUFACTURING METHOD OF SECONDARY BATTERY**
SEPARATOR FÜR SEKUNDÄRBATTERIE, SEKUNDÄRBATTERIE SELBIGEN UMFASSEND UND HERSTELLUNGSVERFAHREN FÜR SEKUNDÄRBATTERIE
SÉPARATEUR POUR BATTERIE SECONDAIRE, BATTERIE SECONDAIRE LE COMPRENANT ET PROCÉDÉ DE FABRICATION DE BATTERIE SECONDAIRE

(30) Priority: 01.11.2022 KR 20220143308
(43) Date of publication of application: 19.06.2024
(73) Proprietor: LG ENERGY SOLUTION, LTD., Seoul 07335 (KR)
(72) Inventor: BAE, Dong Hun, 34122 Daejeon (KR); SHIN, Hwan Ho, 34122 Daejeon (KR); SUNG, Dong Wook, 34122 Daejeon (KR); KIM, Ji Eun, 34122 Daejeon (KR)
(74) Representative: Goddar, Heinz J.

(56) References cited:
- EP-A1- 3 734 700
- EP-A1- 4 138 202
- WO-A1-2022/015026
- US-A1- 2015 263 325

## Description

### TECHNICAL FIELD

The present disclosure relates to a separator for a secondary battery, and more particularly, to a separator for a secondary battery, a secondary battery including the same, a manufacturing method of the separator and a manufacturing method of the secondary battery.

### BACKGROUND

As a representative example of a secondary battery, a lithium ion battery includes a negative electrode, a separator, an anode, and an electrolyte solution. The lithium ion battery is a high-energy density device capable of reversible conversion of chemical and electrical energy through charge and discharge. The lithium ion battery is widely used in small electronic devices such as mobile phones and laptops. Recently, in order to respond to environmental problems, high oil prices, energy efficiency, and storage, the lithium ion battery is applied more widely to hybrid electric vehicles (HEV), plug-in EVs, electric bicycles (E-bikes), and energy storage systems. The lithium-ion battery is a stable electrochemical device that is insulated by a separator. However, any internal or external battery abnormality or shock can cause a short circuit between a negative electrode and a positive electrode, possibly leading to heating and explosion. Therefore, ensuring the thermal and chemical stability of the separator serving as an insulator is of utmost importance.

One of the main research objectives in secondary batteries is to enhance safety at high temperatures. For example, in the secondary battery, the internal temperature and pressure of the battery can lead to an explosion due to abnormal operation of the battery caused by a factor such as internal short circuits, overcharging beyond allowable current and voltage, exposure to high temperatures, deformation due to drops or external impact, etc. An internal short-circuit due to shrinkage or damage of the separator, which is caused by exposure of the battery to high temperatures, is a very critical situation, and extensive studies are being conducted to investigate the causes and explore alternative solutions. When secondary battery cells are stored, there is a risk of ignition due to the possibility of an internal short circuit caused by shrinkage of the separator. Excessive coating to prevent such ignition may lead to issues such as reduced cell capacity, increased cell resistance, and increased thickness of the battery cell.

### SUMMARY

The present disclosure provides a separator for a secondary battery, which is capable of effectively holding inorganic particles even at high temperatures after injection of electrolyte solution, thereby enhancing the safety of the secondary battery.

The present disclosure also provides a separator for a secondary battery, which is capable of effectively preventing excessive dissolution of a binder in an electrolyte solution due to swelling caused by the binder absorbing the electrolyte solution.

The present disclosure also provides a secondary battery including the aforementioned separator.

The present disclosure also provides a manufacturing method of a secondary battery, which is capable of securing stability of the secondary battery.

Objectives of the present disclosure are not limited to the aforementioned objectives and other objectives and advantages of the present disclosure, which are not mentioned, can be appreciated by the following description and will be more apparently known by the exemplary embodiments of the present disclosure. It can be easily known that the objects and advantages of the present disclosure can be implemented by the means and a combination thereof described in the appended claims.

In a first embodiment, there is provided a separator for a secondary battery, the separator comprising: a porous substrate; and a coating layer disposed on at least one surface of the porous substrate, wherein the coating layer comprises polyvinylidene fluoride-co-hexafluoropropylene (PVDF-HFP) and inorganic particles and a lamellar thickness of the PVDF-HFP in the coating layer is 2.5 to 3.2 nm.

According to a second embodiment, in the first embodiment, the porous substrate may comprise at least one selected from the group consisting of polyolefin, polyethylene terephthalate, polybutylene terephthalate, polyacetal, polyamide, polycarbonate, polyimide, polyetheretherketone, polyethersulfone, polyphenyleneoxide, polyphenylenesulfide, and polyethylenenaphthalene.

According to a third embodiment, in the first or second embodiment, the inorganic particles may be inorganic particles having a dielectric constant greater than or equal to 5, inorganic particles having lithium-ion transport ability, or mixture of two or more thereof.

According to a fourth embodiment, in any one of the first to third embodiments, the inorganic particles may be selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0 <x<1), Pb₁₋ₓLaₓZr_{1-y}Ti_{y}O₃ (PLZT, where 0 < x < 1 and 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, SiC, lithium phosphate (Li₃PO₄), lithium titanium phosphate (LiₓTi_{y}(PO₄)₃) (where 0< x < 2 and 0 < y < 3), lithium aluminum titanium phosphate (LiₓAl_{y}Ti_{z}(PO₄)₃ (where 0 < x < 2, 0 < y < 1, and 0 < z < 3), (LiAlTiP)ₓO_{y} series glass (where 0 < x < 4 and 0 < y < 13), lithium lanthanum titanate (LiₓLa_{y}TiO₃) (where 0 < x < 2 and 0 < y < 3), lithium Germanium thiophosphate (LiₓGe_{y}P_{z}S_{w}) (where 0 < x < 4, 0 < y < 1, 0 < z < 1, and 0 < w < 5), lithium nitride (LiₓN_{y}) (where 0 < x <4 and 0 < y < 2), SiS₂-based glass (LiₓSi_{y}S_{z}) (where 0 < x < 3, 0 < y < 2, and 0 < z < 4), and P₂S₅-based glass (LiₓP_{y}S_{z} ( where 0 < x < 3, 0 < y < 3, and 0 < z < 7), and a mixture of two or more thereof.

According to a fifth embodiment, in any one of the first to fourth embodiments, a content of hexafluoropropylene (HFP) monomers in the PVDF-HFP may be 8 to 15% by weight, with respect to the total weight of the PVDF-HFP.

According to a sixth embodiment, in any one of the first to fifth embodiments, a weight-average molecular weight (Mw) of the PVDF-HFP may be 300,000 to 600,000 g/mol.

According to a seventh embodiment, in any one of the first to sixth embodiments, the air permeability of the secondary battery separator may be 160 sec/100cc or less.

In another aspect, there is provided a manufacturing method of a secondary battery.

According to an eighth embodiment, the method for manufacturing a separator of a secondary battery, preferably a separator of a secondary battery according to any of the first to the seventh embodiment, comprises (S1) coating a composition for forming a coating layer on at least one surface of a porous substrate; and (S2) drying the composition for forming a coating layer to form a coating layer, wherein the composition for forming a coating layer comprises polyvinylidene fluoride-hexafluoropropylene copolymer (PVDF-HFP), inorganic particles, and a solvent, wherein the solvent comprises a polar organic solvent having a boiling point of at least 120°C.

In a ninth embodiment, in the eighth embodiment, the composition for forming a coating layer in (S2) may be dried at 100 to 170°C for 0.5 to 1.5 hours.

In a tenth embodiment, in the eighth or the ninth embodiment, the polar organic solvent may be selected from the group consisting of 4-dimethylaminopyridine, 1-pentanol, ethylene glycol, dimethylsulfoxide, dimethylformamide, N-methyl-2-pyrrolidone, N-ethyl-2-pyrrolidone, and a mixture of two or more thereof.

In an eleventh embodiment, in any of the eighth to the tenth embodiment, the amount of solvent in the composition for forming a coating layer may be 20 to 40 % by weight, based on a total weight of the composition for forming a coating layer.

In yet another aspect, in a twelfth embodiment, there is provided a separator for a secondary battery obtainable by the method according to any of the eighth to the eleventh embodiment.

In yet another aspect, according to a thirteenth embodiment, there is provided a secondary battery comprising: a negative electrode; a positive electrode; a separator, preferably the separator according to any of the first to the seventh embodiment or according to the twelfth embodiment, arranged (interposed) between the negative electrode and the positive; and an electrolyte solution.

In yet another aspect, according to a fourteenth embodiment, there is provided a method for manufacturing a secondary battery, the method comprising the steps: (S1) manufacturing an electrode assembly by sequentially stacking a positive electrode, a separator according to any of the first to the seventh embodiment or according to the twelfth embodiment, and a negative electrode; (S2) injecting an electrolyte solution into a battery case after loading the electrode assembly into the battery case; and (S3) storing the battery case with the electrolyte solution injected at 55 to 65°C.

The lamellar thickness of the binder in the coating layer may be increased to an appropriate level. Accordingly, it is possible to effectively prevent an increase in dissociation due to swelling of the binder due to the electrolyte solution due to the lamella thickness increased to an appropriate level. Accordingly, the binder having a lowered solubility in the electrolyte solution may hold the inorganic particles included in the coating layer well, so that the stability of the secondary battery can be effectively improved.

In addition to the above effects, specific effects of the present disclosure will be described together while explaining specific details for carrying out the present disclosure.

### BRIEF DESCRIPTION OF THE DRAWINGS

FIG. 1 is a vertical cross-sectional view of a separator for a secondary battery according to an embodiment of the present disclosure.
FIG. 2 shows a change in lamellar thickness of a binder (PVDF-HFP) in a separators according to Examples 1 to 3 and Comparative Examples 1 to 3 when a solvent included in a composition for forming a coating layer was changed.
FIG. 3 shows the solubility of a binder in an electrolyte solution by type of solvent at different temperatures.
FIG. 4A is a result of evaluation of wet adhesion of a coating layer to a porous substrate in a separator according to Comparative Example 1.
FIG. 4B is a result of evaluation of wet adhesion of a coating layer to a porous substrate in a separator according to Example 3.
FIG. 4C is a result of evaluation of wet adhesion of a coating layer to a porous substrate in a separator according to Comparative Example 2.
FIG. 4D is a result of evaluation of wet adhesion of a coating layer to a porous substrate in a separator according to Example 1.
FIG. 5 shows cross-sectional SEM (Scanning Electron Microscope) images of a secondary battery including a separator according to Comparative Example 1 (Fig. 5a) and a cross-sectional SEM image of the separator according to Example 1 (Fig. 5b).
FIG. 6 shows cross-sectional SEM picture of a secondary battery including a separator according to Comparative Example 1 and Example 1.
FIG. 7 is a capacity retention rate according to the number of cycles (3 cycles) of a secondary battery including a separator according to Comparative Example 1 and Example 1.
FIG. 8 is a result of comparing secondary battery cells including separators according to Comparative Example 1 and Example 1.

### DETAILED DESCRIPTION

Hereinafter, various embodiments of the present disclosure will be described in detail so that those ordinarily skilled in the art to which the present disclosure pertains can easily carry out the present disclosure. However, these are only examples given for illustrative purposes, and the scope of the present disclosure is not intended to be limited to the following contents.

Unless otherwise restricted, a detailed description defining or specifying the elements may be applied to all inventions, and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

The term "comprise" or "include" when used in this specification, specifies the presence of stated elements, but does not preclude the presence or addition of one or more other elements, unless the context clearly indicates otherwise. However, unless explicitly stated otherwise, "comprising" or "including" or the like includes "essentially comprising" and "consisting of".

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a material essentially comprising polyethylene comprises the polyethylene in an amount of at least 70 wt% with respect to the total weight of the material.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

Polymer chains crystallize in the form of lamellae (platelet-like objects). Their lateral dimensions usually lie in the range of 1-25 µm. Within these platelets, the polymer chains are arranged to be approximately perpendicular to the top and bottom surfaces. In this specification, "lamellar thickness" is defined as the total height of a platelet crystal form when a polymer chain has a bending shape to form the platelet crystal form.

One embodiment of the present disclosure relates to a separator for a secondary battery. The separator includes a porous substrate, and a coating layer disposed on at least one surface of the porous substrate. The coating layer includes polyvinylidene fluoride-co-hexafluoropropylene (PVDF-HFP) and inorganic particles. In the coating layer, the PVDF-HFP has the lamellar thickness of 2.5 to 3.2 nm.

in preparation of the separator, when acetone is used as a solvent to disperse a binder included in a conventional composition for forming a coating layer, that is, a composition comprising the binder, inorganic particles and acetone as a solvent, there is a problem in that inorganic particles are dislodged due to the precipitation of the binder dissolved in an electrolyte solution. As a result, a content of the inorganic particles in the coating layer is reduced, resulting in deterioration in mechanical durability, heat resistance, and stability of the secondary battery. According to one embodiment of the present disclosure, by using a polar organic solvent having a boiling point of at least 120°C, such as a cyclic amide (solvent), having a relatively lower solubility in PVDF-HFP, instead of acetone, as a solvent included in the composition for forming a coating layer, it is possible to increase the lamellar thickness of the binder in the coating layer to an appropriate level. Accordingly, due to the increased lamella thickness, it is possible to effectively prevent increased delamination caused by swelling of the binder by the electrolyte solution. Accordingly, the binder having a lower solubility in an electrolyte solution holds inorganic particles included in a coating layer well, so that mechanical durability, heat resistance, and stability of a secondary battery can be effectively improved.

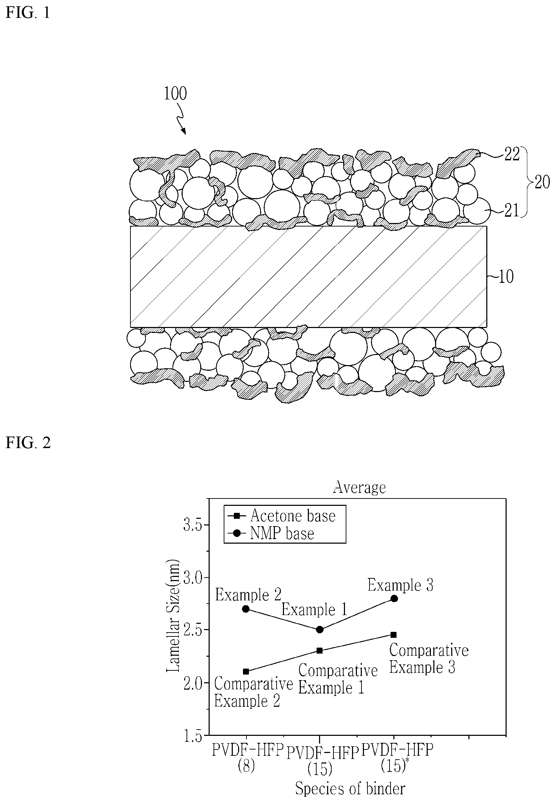

Hereinafter, the configuration of the present disclosure will be described in more detail with reference to FIG. 1.

### 1. Separator for Secondary Battery, and Manufacturing Method Thereof

FIG. 1 is a vertical cross-sectional view of a separator for a secondary battery according to an embodiment of the present disclosure.

Referring to FIG. 1, a separator 100 for a secondary battery according to the present disclosure includes a porous substrate 10 and a coating layer 20.

### (Porous substrate)

The porous substrate 10 according to the present disclosure is able to electrically insulate negative electrodes and positive electrodes to prevent a short circuit while providing a movement path for lithium ions. The porous substrate 10 may be a porous structure with high resistance to an electrolyte solution and a fine pore diameter.

Any organic material or inorganic material having an electrical insulating property may be used as a constituent material of the porous substrate 10. The porous substrate 10 may include, essentially comprise or consist of one or more selected from the group consisting of polyolefins, polyethylene terephthalates, polybutylene terephthalates, polyacetals, polyamides, polycarbonates, polyimides, polyetheretherketones, polyethersulfones, polyphenyleneoxides, polyphenylenesulfides, and polyethylenenaphthalenes, for example. Specifically, the porous substrate 10 may include, essentially comprise or consist of a polyolefin or a mixture of two or more different polyolefins. Preferably, the porous substrate comprises, essentially comprises or consists of polyethylene. Polyolefin, such as polyethylene, not only has excellent coating properties but also allows for reducing a thickness of the separator, increasing the proportion of an active electrode material layer in the battery, and thereby increasing the volumetric capacity per unit volume. Specifically, a weight-average molecular weight (Mw) of the polyolefin may be 100,000 to 500,000 g/mol. When the weight-average molecular weight (Mw) of the polyolefin is less than the aforementioned range, it may be difficult to secure sufficient mechanical properties. When the weight-average molecular weight (Mw) of the polyolefin exceeds the aforementioned range, a shutdown function may not be implemented or molding may be difficult. The shutdown function refers to a function of blocking the movement of ions and preventing thermal runaway of the battery by closing the pores of the porous substrate by dissolving the thermoplastic resin when the temperature of the secondary battery is high.

A thickness of the porous substrate 10 may be, for example, 3 to 12µm or 5 to 12µm, such as about 9 µm. If the thickness of the porous substrate is less than the aforementioned numerical range, the function of a conductive barrier may not be sufficient, and if the thickness of the porous substrate exceeds the aforementioned numerical range, the resistance of the separator may excessively increase. The thickness of the porous substrate (or any other thickness, such as the thickness of the coating layer) may be measured using a thickness meter, such as Mitutoyo VL-50S, especially by the steps of - Press button 2 for a long time and check that the measuring tip touches the bottom, and indicator 4 turns green - When the indicator turns green, press button 3 to set the zero point. (Check that the number in the window changes to 0) - Press button 1 to return the tip to its original position. - Place the punched-out membrane specimen in the size of 5cm x 5cm on the surface plate. - Press button 2 for a long time to check the thickness of the separator. (A total of 5 points, top/bottom/left/right/center, are measured and recorded.

The porous substrate may have a porosity from 10 to 90 %, from 20 to 80 %, from 30 to 70 %, from 40 to 50 %, or from about 45%. The term "porosity" as used herein refers to a fraction of voids in a structure over the total volume and is indicated in vol%, and may be used interchangeably with void fraction, degree of porosity or the like. The porosity can be measured by any method known in the art for this purpose. Especially, the porosity such as the porosity of the porous substrate but also the porosity of any other material may, in accordance with the present disclosure, be measured by the commonly used Hg porosimeter, and for example, may be measured using a mercury porosimeter (Micromeritics AUTOPORE V).

The average diameter of the pores included in the porous substrate 10 may be, for example, 10 to 100 nm. The pores included in the porous substrate are interconnected with each other, so that gas or liquid can pass from one surface of the porous substrate to the other surface. The average diameter of the pores of the porous substrate (or any other diameter of pores referred to herein) can be calculated from a pore size distribution measured using a capillary flow porometer (CFP-1500-AE) method. The relationship between air pressure and flow rate may be measured using the porometer for each of the porous substrate in a dry state (dry sample) and the porous substrate in a wet state (wet sample), and the ventilation curve of the dry sample (dry curve) and the ventilation curve (wet curve) of the wet sample, from which the size and distribution of pores can be confirmed. The method may use a wetting solution having a low surface tension to wet the porous substrate, and then pressurizes it using a gas to push the wetting solution filling the pores of the porous substrate. to measure the pore size. For example, after the porous substrate to be measured is wetted with a wetting solution (Galwick solution), the air pressure on one side of the porous substrate is gradually increased. At this time, when the applied air pressure is greater than the capillary attraction of the wetting fluid present in the pores, the wetting fluid blocking the pores is pushed out, and the pore size and distribution can be measured through the pressure and flow rate at the moment of being pushed out.

### (Coating layer)

The coating layer 20 according to the present disclosure may improve mechanical strength and heat resistance of a secondary battery separator, and may increase ionic conductivity in a secondary battery.

The coating layer 20 according to the present disclosure may be disposed on at least one surface of the porous substrate 10. Specifically, the coating layer 20 may be disposed on one surface of the porous substrate 10 or may be disposed on both surfaces of the porous substrate 10.

The porosity of the coating layer 20 may be 30 to 80%, specifically 40 to 70%, such as from 40 to 50 %. The term "porosity" as used herein refers to a fraction of voids in a structure over the total volume and is indicated in vol%, and may be used interchangeably with void fraction, degree of porosity or the like. In the present disclosure, the porosity of the coating layer may be, for example, measured by the commonly used Hg porosimeter, and for example, may be measured using a mercury porosimeter (Micromeritics AUTOPORE V).

When the porosity of the coating layer is within the aforementioned numerical range, the permeability of lithium ions may be advantageous, and the surface area ratio is not too high, so that the adhesion between the separator and the electrode can be maintained at an appropriate level.

An average size of the pores included in the coating layer 20 may be 20 to 1,000 nm, specifically 100 to 500 nm. In this regard, the size of a pore refers to the diameter of the pore which is the longest distance between two opposed outer surfaces of the pore. When the average size of the pores included in the coating layer is within the aforementioned numerical range, the pores may not be blocked due to expansion of a binder resin in the coating layer, and the function as an insulating film is well maintained, so that the self-discharge characteristic can be maintained at an appropriate level after the secondary battery is manufactured. The average size of the pores included in the coating layer may be calculated through Scanning Electron Microscope (SEM) image analysis.

The coating layer 20 according to the present disclosure is a dried composition for forming a coating layer, that is, obtained or obtainable by coating a respective coating composition on the porous substrate and drying the coating composition. Specifically, the composition for forming a coating layer includes polyvinylidene fluoride-co-hexafluoropropylene (PVDF-HFP), inorganic particles, and a solvent. During the preparation of the coating layer, the solvent evaporates.

The PVDF-HFP may provide a force to bind the porous substrate and the coating layer as a binder, and may help a plurality of inorganic particles included in the coating layer to form a surface binding or point binding structure. Accordingly, the PVDF-HFP may serve to fix the inorganic particles in the coating layer so that the inorganic particles are not deintercalated.

In the PVDF-HFP, a content of hexafluoropropylene (HFP) monomer may be 5 to 20% by weight, specifically 6 to 18% by weight, and more specifically 8 to 15% by weight. The content of HFP monomer in the PVDF-HFP can be determined by ¹H-NMR and/or ¹⁹F-NMR. If the content of HFP monomers in the PVDF-HFP is less than the aforementioned numerical range, it may dissolve in the electrolyte solution, thereby deteriorating stability, and if the content of HFP monomers exceeds the aforementioned numerical range, wet adhesion is not formed, thereby preparing a soft cell. For example, the content of the HFP monomers may be defined as the weight percentage of repeating units consisting of a molecular structure (-CF₂CF(CF₃)-) of HFP, as represented in Formula 1 (where m+n=100 wt%).

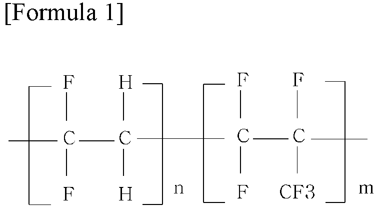

According to another embodiment of the present disclosure, based on the total weight of the composition used for forming a coating layer, a content of the PVDF-HFP may be 7 to 18% by weight, specifically 7 to 13% by weight, and more specifically, 7 to 11% by weight. The coating layer is formed by drying the composition, especially by removing volatile constituents of the composition. After drying the content of the PVDF-HFP may be from 12 to 24 % by weight, specifically from 15 to 21 % by weight, more specifically from 17 to 19 % by weight, such as about 18 % by weight, based on the total weight of the coating layer. When the content of the PVDF-HFP is within the aforementioned numerical range, the adhesion between the electrode and the separator for a secondary battery is maintained at an appropriate level and deintercalation of inorganic particles may be effectively prevented.

According to another embodiment of the present disclosure, the weight-average molecular weight (Mw) of the PVDF-HFP may be 300,000 to 600,000 g/mol, specifically 350,000 to 500,000 g/mol. When the weight-average molecular weight (Mw) of the PVDF-HFP is within the aforementioned numerical range, the coatability of the composition for forming a coating layer may be properly maintained, and deintercalation of inorganic particles from the coating layer may be effectively prevented. The weight-average molecular weight (Mw) of the PVDF-HFP may be measured using, for example, gel permeation chromatography (GPC: PL GPC220, Agilent Technologies),especially, may be measured using an Agilent High Temperature RI detector under the conditions of a PL Olexia (Polymer Laboratories, column temperature 160 °C) column with TCB (trichlorobenzene) as a solvent, a sample concentration of 1.0 mg/mL, a flow rate of 1.0 mL/min, and an injection volume of 200 µL. there is.

### (Correction with cubic function, standard: polystyrene).

The inorganic particles 21 according to the present disclosure may contribute to improving mechanical strength and heat resistance of the separator for a secondary battery. Specifically, the inorganic particles are not particularly limited as long as they are electrochemically stable. That is, the inorganic particles usable in the present disclosure are not particularly limited as long as oxidation and/or reduction reactions do not occur in the operating voltage range (e.g., 0 to 5V based on Li/Li+) of a secondary battery to be applied.

For example, when inorganic particles with high permittivity are used, the inorganic particles contribute to an increase in dissociation of an electrolyte salt, for example, a lithium salt in a liquid electrolyte, thereby improving the ionic conductivity of electrolyte solution. For the reasons described above, the inorganic particles may be inorganic particles having a dielectric constant greater than or equal to 5, inorganic particles having lithium ion transport ability, or a mixture thereof.

The inorganic particles having a dielectric constant greater than or equal to 5 may be a mixture of one or more selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0 <x<1), Pb₁₋ₓLaₓZr_{1-y}Ti_{y}O₃ (PLZT, where 0 < x < 1 and 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, and SiC.

The inorganic particles having lithium ion transport ability may be a mixture of one or more selected from the group consisting of the group consisting of lithium phosphate (Li3PO4), lithium titanium phosphate (LiₓTi_{y}(PO₄)₃) (where 0 < x < 2 and 0 < y < 3), lithium aluminum titanium phosphate (LiₓAl_{y}Ti_{z}(PO₄)₃ (where 0 < x < 2, 0 < y < 1, and 0 < z < 3), (LiAlTiP)ₓO_{y} series glass (where 0 < x < 4 and 0 < y < 13), lithium lanthanum titanate (LiₓLa_{y}TiO₃) (where 0 < x < 2 and 0 < y < 3), lithium Germanium thiophosphate (LiₓGe_{y}P_{z}S_{w}) (where 0 < x < 4, 0 < y < 1, 0 < z < 1, and 0 < w < 5), lithium nitride (LiₓN_{y}) (where 0 < x <4 and 0 < y < 2), SiS₂-based glass (LiₓSi_{y}S_{z}) (where 0 < x < 3, 0 < y < 2, and 0 < z < 4), and P₂S₅-based glass (LiₓP_{y}S_{z} (where 0 < x < 3, 0 < y < 3, and 0 < z < 7).

For example, in order to form a coating layer with a uniform thickness and an appropriate porosity, the average particle diameter (D50) of the inorganic particles may be 1 nm to 10µm, specifically 10 nm to 2µm, and more specifically 50 nm to 1µm, from 50 nm to 200 nm, such as about 100 nm. The "average particle diameter (D50)" means the diameter (particle diameter) at a point of 50 % in the particle number cumulative distribution depending on particle diameter. The average particle diameter may be determined by using a laser diffraction method. Specifically, a material to be determined is dispersed in a dispersion medium, and the resultant dispersion is introduced to a commercially available laser diffraction particle size analyzer (e.g., Microtrac S3500) to determine a difference in diffraction pattern depending on particle size, when particles pass through laser beams, thereby providing particle size distribution.

According to one aspect of the present disclosure, the separator, that is, the separator comprising PVDF-HFP with a lamellar thickness from 2.5 to 3.2 nm in a coating layer thereof, may be manufactured by a method for manufacturing a separator for a secondary battery, the method comprising: (S1) coating a composition for forming a coating layer on at least one surface of a porous substrate (10); and (S2) drying the composition for forming a coating layer (20) to form a coating layer (20), wherein the composition for forming a coating layer comprises polyvinylidene fluoride-hexafluoropropylene copolymer (PVDF-HFP), inorganic particles, and a solvent, wherein the solvent comprises a polar organic solvent having a boiling point of at least 120°C.

The solvent according to the present disclosure, that is, the solvent in the coating composition used for preparing the coating layer 20 may serve to adjust the lamellar thickness of the binder (PVDF-HFP) 22 in the coating layer 20 and to make the dispersion of the binder 22 and the inorganic particles 21 in the composition for forming a coating layer 20 uniform.

According to the present disclosure, the solvent a polar organic solvent having a boiling point of at least 120°C. According to the present disclosure, a solvent is considered as a polar solvent if it has a polarity according to Snyder of at least 5 (Snyder, Modern Methods of Pharmaceutical Analysis, Second Edition, Volume 2, Roger E. Schirmer, CRC Press, 1990).

The polar organic solvent may have a boiling point of at least 130°C, at least 140°C, at least 150°C, at least 160°C, at least 170°C, at least 180°C, at least 190°C, or at least 200°C. The polar organic solvent may have a boiling point of not more than 300°C, not more than 290°C, more than 280°C, not more than 270°C, not more than 260°C, not more than 250°C, not more than 240°C, not more than 230°C, not more than 220°C, or not more than 215°C.

In one embodiment, the polar organic solvent is selected from the group consisting of 4-dimethylaminopyridine (DMAP), 1-pentanol, ethylene glycol, dimethylsulfoxide (DMSO), dimethylformamide (DMF), N-methyl-2-pyrrolidone (NMP), N-ethyl-2-pyrrolidone (NEP), and a mixture of two or more thereof.

The polar solvent having a boiling point of at least 120°C according to the present disclosure may include, substantially comprise or consist of a cyclic amide or a mixture of two or more thereof. Specifically, the solvent may include, substantially comprise or consist of any one selected from a group constituting N-methyl-2-pyrrolidone (NMP), N- ethyl-2-pyrrolidone (NEP), and a mixture thereof. In general, in the related art to which the present disclosure pertains, a solvent included in a composition for forming a coating layer is used to uniformly disperse a binder and inorganic particles in a composition for forming a coating layer, and then the composition for forming a coating layer is dried, so the role of the solvent is limited. According to one embodiment of the present disclosure, by using a cyclic amide (solvent) or another solvent having a high boiling point and a high polarity and having a relatively lower solubility in PVDF-HFP than acetone as a solvent included in the composition for forming a coating layer, it is possible to increase the lamellar thickness of the binder in the coating layer to an appropriate level. Accordingly, it is possible to effectively prevent an increase in dissociation due to swelling of the binder due to the electrolyte solution due to the lamella thickness increased to an appropriate level. Accordingly, the binder having a lowered solubility in the electrolyte solution may hold the inorganic particles included in the coating layer well, so that the stability of the secondary battery can be effectively improved.

According to another embodiment of the present disclosure, based on the total weight of the composition for forming a coating layer, the content of the solvent in the composition for forming a coating layer may be 20 to 70% by weight, specifically 20 to 50% by weight, and more specifically 20 to 40% by weight, based on 100 % by weight of the composition for forming a coating layer. When the content of the solvent is within the aforementioned numerical range, the lamella thickness of the binder in the coating layer may be increased, and the increased lamella thickness may effectively prevent an increase in dissociation due to swelling of the binder caused by the electrolyte solution. Accordingly, the binder having a lowered solubility in the electrolyte solution may hold the inorganic particles included in the coating layer well, so that the stability of the secondary battery can be effectively improved.

The composition for forming a coating layer according to one aspect of the present disclosure may be dried by a drying step including or being drying at 100 to 170°C for 0.5 to 1.5 hours, specifically at 100 to 150°C for 0.8 to 1.2 hours, and more specifically at less than 100 to 120°C for 0.8 to 1.0 hour or at 100 to 115°C for 0.8 to 1.0 hour. In this case, the composition for forming a coating layer according to the aspect of the present disclosure may be on a laboratory scale.

The composition for forming a coating layer according to another aspect of the present disclosure may be dried at 120 to 170°C for 3 minutes or less, at 130 to 150°C °C for 2 minutes or less, or at 130 to 140°C, such as about 130°C for 1 minute or less. In this case, the composition for forming a coating layer according to the another aspect of the present disclosure may be on a mass production scale. When the drying temperature and drying time of the composition for forming a coating layer are within the aforementioned numerical ranges, the lamella thickness of PVDF-HFP (binder) in the coating layer may be adjusted to an appropriate level.

That is, taking the laboratory scale and the mass production scale together, the composition for forming a coating layer may be dried at 100 to 170°C for 0.5 to 1.5 hours or at about 130°C for 3 minutes or less.

In the coating layer 20 according to the present disclosure, the lamellar thickness of PVDF-HFP 22 may be 2.5 to 3.2 nm, specifically 2.5 to 3.0 nm, and further more specifically 2.6 to 2.9 nm. For example, the lamellar thickness of the PVDF-HFP in the coating layer may be analyzed through a shadowing method using an electron microscope or through a method using small angle x-ray scattering (SAXS) equipment. The PVDF-HFP (binder) may form a platelet crystal form in the coating layer as the polar organic solvent, such as a cyclic amide, in the composition for forming a coating layer is dried. The lamellar thickness of the PVDF-HFP in the coating layer may vary independently depending on the type and content of the binder, the type and content of the solvent, and the drying temperature and drying time of the solvent in the composition for forming a coating layer. According to an embodiment of the present disclosure, by deriving the optimal combination of the type and content of the binder, the type and content of the solvent, and the drying temperature and drying time of the solvent, it is possible to provide a secondary battery separator with the optimal lamella thickness that contributes to the stability of a secondary battery.

According to yet another embodiment of the present disclosure, the air permeability of the secondary battery separator may be 180 sec/100 cc or less, specifically 160 sec/100 cc or less, more specifically 158 sec/100 cc or less, and further more specifically 150 to 158 sec/100cc. The air permeability of the secondary battery separator is defined as the time it takes for 100cc of air at a constant pressure to pass through the unit area of the separator. The air permeability of the secondary battery separator may vary independently depending on factors such as the type and content of the solvent, the drying temperature and time of the solvent, the thickness of the separator, and the porosity of the separator. The lower the time for 100 cc of air to pass through the separator, the better the air permeability, and accordingly, the rate characteristics of the battery may be improved. For example, the air permeability of the secondary battery separator may be measured using an air permeability meter that is commercially available in the related art.

### 2. Secondary Battery

In another embodiment of the present disclosure, a secondary battery including a negative electrode, a positive electrode, a separator interposed between the negative electrode and the positive electrode, and an electrolyte solution is provided. Repeated configuration with the above description is briefly described or not described.

### (negative electrode)

A negative electrode according to the present disclosure may include a negative electrode current collector and a negative electrode active material layer disposed on at least one surface of the negative electrode current collector. The negative electrode active material layer may include a negative electrode active material, a conductive additive, and a negative electrode binder.

The negative electrode current collector may serve as a passage to transfer electrons from the outside so that an electrochemical reaction occurs in the negative electrode active material or to receive electrons from the negative electrode active material so as to send the electrons to the outside. For example, copper, stainless steel, aluminum, nickel, titanium, fired carbon, or aluminum or stainless steel surface-treated with carbon, nickel, titanium, or silver may be used as the negative electrode current collector. Specifically, a transition metal that adsorbs carbon well, such as copper and nickel, may be used as the current collector. For example, the negative electrode current collector may have a thickness of 6µm to 20µm, but the thickness of the negative electrode current collector is not limited thereto.

The negative electrode active material may serve to store or release lithium ions and generate electricity. For example, the negative electrode active material may include at least one of silicon-based active material particles and graphite-based active material particles.

At least one selected from the group consisting of silicon (Si), SiOx (0<x<2), a Si-C composite, and a Si-Y alloy (where Y is an element selected from the group consisting of alkali metal, alkaline earth metal, transition metal, a Group 13 element, a Group 14 element, a rare earth element, and a combination thereof) may be used as the silicon-based active material particles.

At least one selected from the group consisting of artificial graphite, natural graphite, graphitized carbon fibers, and graphitized mesocarbon microbeads may be used as the graphite-based active material particles.

The content of the negative electrode active material may be 80 to 97% by weight based on the total solid content included in the negative electrode active material layer.

The conductive additive may improve conductivity between active material particles or with a metal current collector in an electrode and prevent the binder from acting as an insulator. The conductive additive may be a mixture of one or more conductive materials selected from the group consisting of graphite, carbon black, carbon fibers or metallic fibers, metal powder, conductive whisker, conductive metal oxide, activated carbon, and polyphenylene derivatives. More specifically, the conductive additive may be a mixture of one or more conductive materials selected from the group consisting of natural graphite, artificial graphite, super-p, acetylene black, ketjen black, channel black, furnace black, lamp black, thermal black, denka black, aluminum powder, nickel powder, zinc oxide, potassium titanate, and titanium oxide.

The negative electrode binder may suppress separation between the negative electrode active material particles or between the negative electrode and the current collector. As the negative electrode binder, a polymer commonly used in electrodes in the art may be used. Non-limiting examples of the negative electrode binder may be poly(vinylidene fluoride co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, and carboxyl methyl cellulose. However, the negative electrode binder is not limited thereto.

### (positive electrode)

The positive electrode according to the present disclosure may include a positive electrode current collector and a positive electrode active material layer disposed on at least one surface of the positive electrode current collector. The positive electrode active material layer may include a positive electrode active material, a conductive additive, and a positive electrode binder.

For example, the positive electrode current collector is not particularly limited, as long as it has high conductivity while not causing any chemical change in the corresponding battery. Specifically, copper, stainless steel, aluminum, nickel, titanium, fired carbon, copper or stainless steel surface-treated with one of carbon, nickel, titanium, silver, etc., and an aluminum-cadmium alloy may be used as the positive electrode current collector. In general, the positive electrode current collector may have a thickness of 6 to 20µm.

For example, the positive electrode active material may include a lithium transition metal oxide. The lithium transition metal oxide may be, for example, at least one selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, O≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}CO_{z2}O₄(0.5<x11<1.3, 0<z2<2), Liₓ₁₂CoPO₄(0.5<x12<1.3), and Liₓ₁₃FePO₄(0.5<x13<1.3).

The conductive additive used for the positive electrode may be the same as or different from the conductive additive used for the negative electrode.

The positive electrode binder may be the same as or different from the negative electrode binder.

### (electrolyte solution)

An electrolyte solution according to the present disclosure may include a solvent and a lithium salt.

The solvent according to the present disclosure may be, for example, a mixture of one or more types selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (GBL), fluoroethylene carbonate (FEC), methyl formate , ethyl formate, propyl formate, methyl acetate, ethyl acetate, propyl acetate, pentyl acetate, methyl propionate, ethyl propionate, ethyl propionate and butyl propionate.

The lithium salt according to the present disclosure may include, for example, anions such as NO₃⁻, F⁻, Cl⁻, Br⁻, I⁻, and PF₆⁻.

The secondary battery according to the present disclosure may be a cylinder-type, a square-type or a pouch-type secondary battery, but is not limited thereto as long as it corresponds to a charge and discharge device.

In addition, the present disclosure provides a battery module including the lithium secondary battery as a unit cell, and a battery pack including the same. The battery pack may be used as a power supply of one or more types of medium to large sized devices selected from the group consisting of a power tool; an electric vehicle such as an electric vehicle (EV), a hybrid electric vehicle (HEV), and a plug-in hybrid electric vehicle (PHEV); and a system for power storage.

### 3. Manufacturing Method of Secondary Battery

According to yet another embodiment of the present disclosure, there may be provided a manufacturing method of a secondary battery, especially the secondary battery as disclosed above, the method including: (S1) manufacturing an electrode assembly by sequentially stacking a positive electrode, a separator, especially the separator including a coating layer comprising PVDF-HFP with a lamellar thickness from 2.5 to 3.2 nm, and a negative electrode; (S2) injecting an electrolyte solution into a battery case after loading the electrode assembly into the battery case; and (S3) storing, at 40 to 80 °C, the battery case with the electrolyte solution injected. Specifically, (S3) may be an operation of storing the battery case, where the electrolyte solution is injected, at 50 to 70 °C or 55 to 65 °C.

When storing at the above temperature range the battery case with the electrolyte solution injected in (S3), if a lamellar thickness of the binder according to the present disclosure is within an appropriate range, the binder is not dissolved in the electrolyte solution and thus the wet adhesion may be increased. Accordingly, the stiffness of a cell is increased, so that a cell transfer process can be efficiently performed and the stability of the cell can be secured. If the lamellar thickness of the binder is out of the appropriate range or a lamellar structure is not formed, a cell with low stiffness may be realized, so the cell may be bent, possibly leading to a problem in a cell transfer process.

Hereinafter, examples of the present disclosure will be described in detail so that those having ordinary skill in the technical field to which the present disclosure pertains can easily carry out the present disclosure. However, these examples are only for illustrative purposes, and the scope of the present disclosure is not intended to be limited to the following matters.

### [Preparation Example: Preparation of composition for forming a coating layer]

### <Comparative Preparation Example 1: Preparation of Composition for Forming Coating Layer Containing Acetone as Solvent>

PVDF-HFP (Mw = 350,000 to 500,000 g/mol) serving as a binder and having a content of HFP monomer of 15% by weight was added to acetone (solvent) and dissolved at 60°C for 1 hour to prepare a polymer solution (a solid content = 25% by weight). Inorganic particles (Al₂O₃) having an average particle diameter (D50) of 0.1 µm were added to the polymer solution and then crushed and pulverized with a ball mill for 12 hours or more to prepare a coating layer forming composition containing a mixture of PVDF-HFP and Al₂O₃ in a weight ratio of 1:9.

### <Comparative Preparation Example 2: Case Where Content of HFP Monomer Is 8% by Weight, Unlike Comparative Preparation Example 1>

A composition for forming a coating layer was prepared in the same manner as in Comparative Preparation Example 1, but PVDF-HFP in which a content of HFP monomers was changed from 15% by weight to 8% by weight was used.

### <Comparative Preparation Example 3: Case Where Solid Content in Polymer Solution Is Different from in Comparative Preparation Example 1>

A composition for forming a coating layer was prepared in the same manner as in Comparative Preparation Example 1, but a content of acetone was adjusted so that a solid content in the polymer solution was 20% by weight.

### <Preparation Example 1: Preparation of Coating Layer Forming Composition Containing NMP as Solvent>

A composition for forming a coating layer was prepared in the same manner as in Comparative Preparation Example 1, but N-methyl-2-pyrrolidone (NMP) was used instead of the acetone.

### <Preparation Example 2: Case Where Content of HFP Monomers Is 8% by Weight, Unlike Preparation Example 1>

A composition for forming a coating layer was prepared in the same manner as in Preparation Example 1, but PVDF-HFP in which a content of HFP monomer was changed from 15% by weight to 8% by weight was used.

### <Preparation Example 3: Case Where Solvent Content Is Different from in Preparation Example 1>

A composition for forming a coating layer was prepared in the same manner as in Preparation Example 1, but a polymer solution having a solid content of 20% by weight was prepared by adjusting the content of NMP (solvent).

### <Preparation Example 4: Case Where Content of HFP Monomers Is less than 8% by Weight or more than 15% by Weight, Unlike Preparation Example 1>

It was tried to form a coating layer from compositions in the same manner as in Preparation Example 1, but PVDF-HFP in which a content of HFP monomer was changed to more than 15% by weight or less than 8% by weight. With less than 8wt%, the solubility of PVDF-HFP in the electrolyte was too good to apply to cells. With more than 15wt%, it was difficult to apply to cells due to the poor dispersion.

### [Manufacturing Example 1: Manufacturing of Separator for Secondary Battery]

### <Comparative Example 1: Manufacturing of Separator Including Coating Layer According to Comparative Preparation Example 1>

A composition for forming a coating layer according to Comparative Preparation Example 1 was applied by a slot-die coating method on both sides of a polyethylene porous substrate having a thickness of 9µm and a porosity of 45%, and then dried at 110 ° C for 1 hour to form a coating layer having a thickness of 5µm. At 110°C slow evaporation of the used solvent NMP is induced.

### <Comparative Example 2: Manufacturing of Separator Including Coating Layer According to Comparative Preparation Example 2>

A separator for a secondary battery was prepared in the same manner as in Comparative Example 1, but the composition for forming a coating layer according to Comparative Preparation Example 2 was used instead of the composition for forming a coating layer according to Comparative Preparation Example 1.

### <Comparative Example 3: Manufacturing of Separator Including Coating Layer According to Comparative Preparation Example 3>

A separator for a secondary battery was prepared in the same manner as in Comparative Example 1, but the composition of forming a coating layer according to Comparative Preparation Example 3 was used instead of the composition of forming a coating layer according to Comparative Preparation Example 1.

### <Example 1: Manufacturing of Separator Including Coating Layer According to Preparation Example 1>

A separator for a secondary battery was prepared in the same manner as in Comparative Example 1, but the composition of forming a coating layer according to Preparation Example 1 was used instead of the composition of forming a coating layer according to Comparative Preparation Example 1.

### <Example 2: Manufacturing of Separator Including Coating Layer According to Preparation Example 2>

A separator for a secondary battery was prepared in the same manner as in Example 1, but the composition of forming a coating layer according to Preparation Example 2 was used instead of the composition of forming a coating layer according to Preparation Example 1.

### <Example 3: Manufacturing of Separator Including Coating Layer According to Preparation Example 3>

A separator for a secondary battery was prepared in the same manner as in Example 1, but the composition of forming a coating layer according to Preparation Example 3 was used instead of the composition of forming a coating layer according to Preparation Example 1.

### [Experimental Example 1: whether binder is deintercalated to electrolyte solution]

While separator specimens were prepared by the method according to Comparative Example 1, three specimens were prepared by varying the temperature and the concentration of the binder. After immersing the three specimens (Comparative Examples 1-1 to 1-3) and a separator specimen of Example 1 in an electrolyte solution for 24 hours, whether or not the binder was deintercalated was observed and the results of the observation are shown in Table 1 below. The electrolyte solution is in a solution state in which 1 molar (M) LiPF₆ is dissolved in a carbonate-based mixed solvent where ethylene carbonate and ethylmethyl carbonate are mixed in a volume ratio of 1:1.

However, in Table 1 below, the concentration of the binder is defined as the solid content in the polymer solution.

**[Table 1]**

| Division | Comparative Example 1-1 | Comparative Example 1-2 | Comparative Example 1-3 | Example 1 |
|---|---|---|---|---|
| Concentration of Binder (weight%) | 25 | 25 | 20 | 25 |
| Temperature in Chamber | 25°C | 60°C | 60°C | 60°C |
| Precipitation of binder | X | O | O | X |

Referring to Comparative Examples 1-1 to 1-3 in Table 1, when a solvent of a composition for forming a coating layer is acetone, it is apparent that a binder is dissolved in an electrolyte solution and deintercalated as temperature increases. On the other hand, when the solvent of the composition for forming a coating layer is N-methyl-2-pyrrolidone (NMP) as shown in Example 1, it is apparent that the swelling of the binder is suppressed by the electrolyte solution due to its low solubility in the electrolyte solution. As a result, it can be inferred that the stability of the secondary battery can be improved by holding the inorganic particles well at high temperature when the coating layer is prepared using N-methyl-2-pyrrolidone.

### [Experimental Example 2: Measurement of Lamellar Size of Binder According to Composition for Forming Coating Layer]

FIG. 2 shows a change in lamellar thickness of a binder (PVDF-HFP) in the separator according to Examples 1 to 3 and Comparative Examples 1 to 3 when a solvent included in a composition for forming a coating layer was changed. A lamella thickness of a binder was analyzed using small angle x-ray scattering (SAXS) equipment. Model fitting was applied after analysis through transmission-small angle x-ray scattering (T-SAXS ). In addition, a correlation curve was obtained through Fourier transformation to obtain a degree of crystallinity and a distance between crystalline parts to thereby calculate the lamellar thickness.

In FIG. 2, PVDF-HFP (8) includes a binder having an HFP monomer content of 8% by weight, and a content of the solvent in the composition for forming a coating layer is about 23% by weight. PVDF-HFP (15) includes a binder having an HFP monomer content of 15% by weight, and a content of the solvent in the composition for forming a coating layer is about 23% by weight. PVDF-HFP (15)* includes a binder having an HFP monomer content of 15% by weight, and a content of the solvent in the composition for forming a coating layer is about 20% by weight.

Referring to FIG. 2, it is apparent that an average lamella thickness of the binder in a coating layer included in the separator according to Examples 1 to 3 is 2.5 to 3.2 nm, and it is apparent that the lamellar thickness of the binder in the coating layer included in the separator according to Comparative Examples 1 to 3 is less than 2.5 nm.

### [Experimental Example 3: Solubility of Binder in Electrolyte Solution by Type of Solvent at Different Process Temperatures During Cell Fabrication]

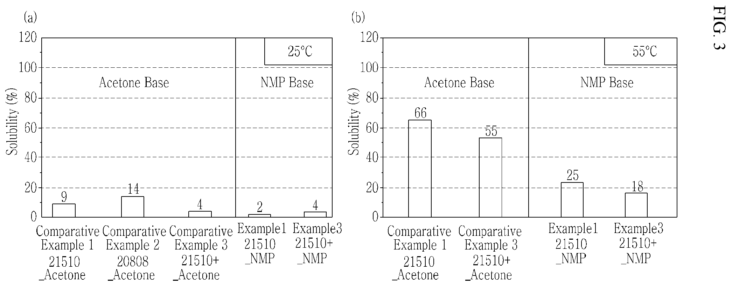

FIG. 3 shows the solubility of a binder in an electrolyte solution by type of solvent at different process temperatures during cell fabrication.

Referring to (a) in FIG. 3, as a solvent included in a composition for forming a coating layer was changed from acetone to N-methyl-2-pyrrolidone (NMP) at 25°C , it is apparent that the separator according to Examples 1 and 3 has lower solubility of a binder in an electrolyte solution than the separator according to Comparative Examples 1 to 3.

Referring to (b) in FIG. 3, even if the temperature condition of the cell fabricating process is increased from 25 ° C to 55 ° C, it is apparent that the solubility of the binder included in the coating layer of the separators according to Comparative Examples 1 and 3 is excessively increased in the electrolyte solution. On the other hand, the binder included in the coating layer of the separators according to Examples 1 and 3 may effectively prevent excessive increase in the solubility of the binder in the electrolyte solution, compared to Comparative Examples 1 and 3.

### [Experimental Example 4: Evaluation of Wet Adhesion of Coating Layer to Porous Substrate]

For separator specimens (20 mm X 70 mm) according to Comparative Examples 1, 2 and Example 3, which were taken out after being immersed in the electrolyte solution for 24 hours, the coating layer was subject to a force applied at a measurement speed of 200 mm/min using a universal testing machine (UTM) to evaluate wet adhesion. Specifically, the electrolyte solution is in a solution state in which 1M LiPF₆ is dissolved in a carbonate-based mixed solvent where ethylene carbonate and ethylmethyl carbonate are mixed in a volume ratio of 1:1.

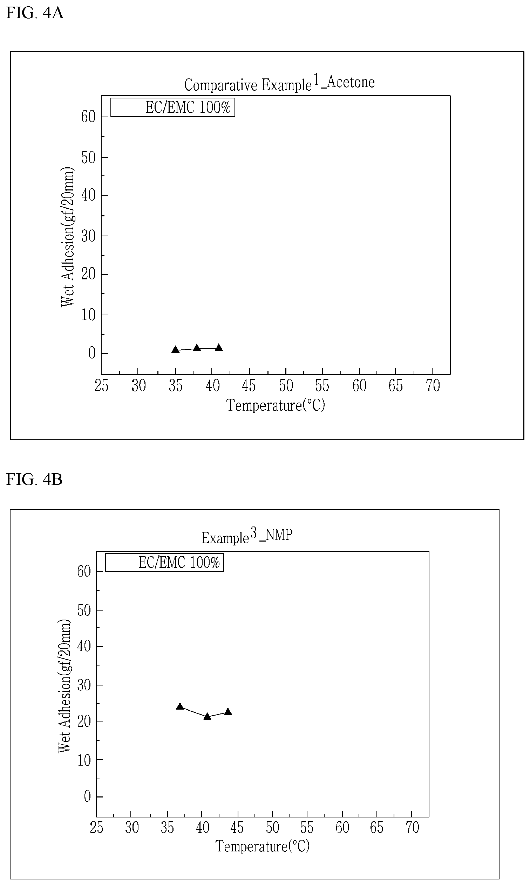

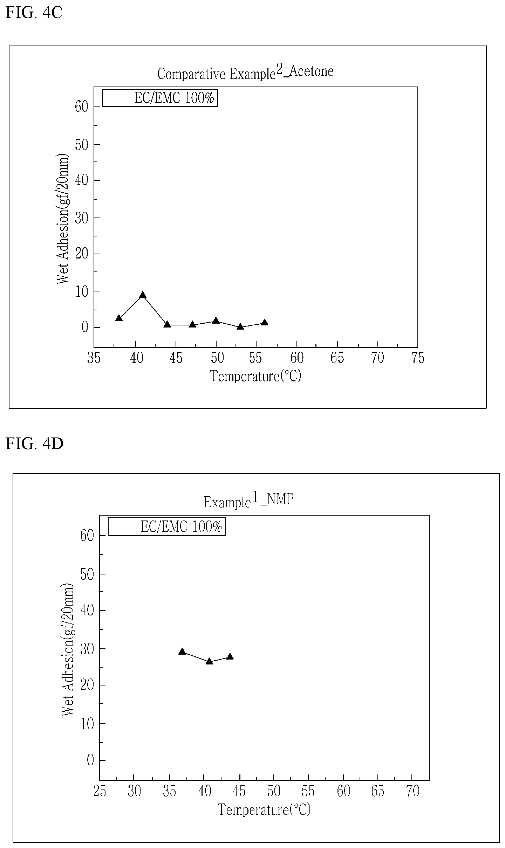

FIG. 4A is a result of evaluation of wet adhesion of a coating layer to a porous substrate in the separator according to Comparative Example 1. FIG. 4B is a result of evaluation of wet adhesion of a coating layer to a porous substrate in the separator according to Example 3. FIG. 4C is a result of evaluation of wet adhesion of a coating layer to a porous substrate in the separator according to Comparative Example 2. FIG. 4D is a result of evaluation of wet adhesion of a coating layer to a porous substrate in the separator according to Example 1.

Referring to FIGS. 4A to 4D, it is apparent that the separator according to Examples 1 and 3 have higher wet adhesion of a coating layer to a porous substrate in an environment where an electrolyte solution is injected, compared to the separators of Comparative Examples 1 and 2.

### [Experimental Example 5: Evaluation of Air Permeability of Separator for Secondary Battery]

In order to measure the air permeability of the separator according to Comparative Example 1 and Example 1, a time sec for 100 cc of air to pass through each separator at a constant pressure (0.05 MPa) was measured using an air permeability meter (manufacturer: Asahi Seiko, product name: EG01-55-1MR). A total of three points, that is, a point of the left side, a point of the middle, and a point of the right side of each separator, were measured to calculate an average time, and the results are shown in Table 2 below. The lower the time for 100 cc of air to pass through a separator, the better the air permeability, which indirectly suggests that the rate characteristics of the battery are improved.

**[Table 2]**

| Division | Comparative Example 1 | Example 1 |
|---|---|---|
| Air permeability (sec/100cc) | 185 | 158 |
| Type of Solvent | acetone | NMP |

Referring to Table 2, it is apparent that air permeability performance is improved by using NMP instead of acetone as a solvent of the composition for forming a coating layer. Accordingly, it may be suggested that the rate characteristics of the secondary battery are improved.

### [Manufacturing Example 2: Manufacturing of Secondary Battery]

A secondary battery was manufactured using the separator according to Comparative Example 1 and Examples 1 and 3. Specifically, the positive electrode and the negative electrode were prepared by the following method.

### (manufacturing of positive electrode)

In the case of the positive electrode, a positive electrode active material (LiNi_{0.6}Co_{0.2}Mn_{0.2}O₂), a conductive additive (FX35), and a binder (PVDF) were added to a solvent (NMP) in a weight ratio of 95:2:3 and then stirred at 2,000 rpm for 30 minutes to prepare a positive electrode slurry. The positive slurry was applied to a 20µm-thick aluminum thin film using a doctor blade, and then dried at 110°C (overnight) to prepare a rolled positive electrode.

### (manufacturing of negative Electrode)

A negative electrode active material (graphite), a conductive additive (Super P), and a binder (CMC: SBR=1:1 (w/w)) were added to a solvent (water) at a weight ratio of 97.5:1.5:1.0, and then stirred at 2,000 rpm for 30 minutes to prepare a negative electrode slurry. The negative electrode slurry was applied to a copper thin film having a thickness of 20µm using a doctor blade, and then dried at 110 °C (overnight) to prepare a rolled negative electrode.

### (manufacturing of secondary Battery)

The rolled positive electrode, the separator, and the rolled negative electrode were stacked in that order and laminated to prepare an electrode assembly. After the electrode assembly was loaded into a battery case, an electrolyte solution was injected to manufacture a secondary battery. The battery case with the electrolyte solution injected was stored at 55°C. The electrolyte solution is in a solution state in which 1M LiPF₆ is dissolved in a carbonate-based mixed solvent where ethylene carbonate and ethylmethyl carbonate are mixed in a volume ratio of 1:1.

### [Experimental Example 6: Observation of SEM Picture of Secondary Battery]

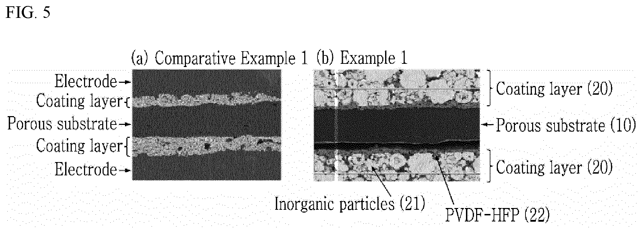

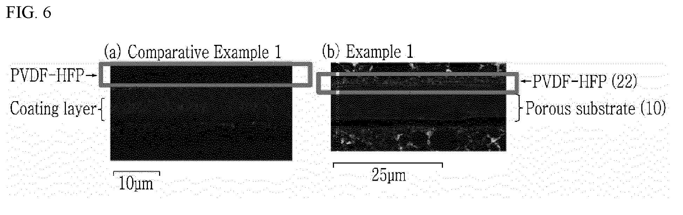

FIG. 5 is a SEM (Scanning Electron Microscope) picture of a secondary battery including a separator according to Comparative Example 1 and a separator according to Example 1. FIG. 6 is a SEM picture of a secondary battery including a separator according to Comparative Example 1 and Example 1.

Referring to FIGS. 5 and 6, it is apparent that a binder of a secondary battery including a separator according to Example 1 is not deintercalated in a coating layer, and a binder of a secondary battery including a separator according to Comparative Example 1 is deintercalated in a coating layer.

Especially, Fig. 6 (b) shows that the binder (PVDF-HFP) is not detached from the substrate in inventive Example 1, while in case of Comparative Example 1 (Fig. 6 (a)) the binder is detached from the substrate.

### [Experimental Example 7: Evaluation of Capacity Retention Rate According to Cycle of Secondary Battery]

For a secondary battery including a separator according to Comparative Example 1 and Example 1, the capacity retention was evaluated according to a set of three cycles of a cell by using the charge-discharge system of PNE Solution Co., Ltd. within a voltage range of 2.5 to 4.3V."

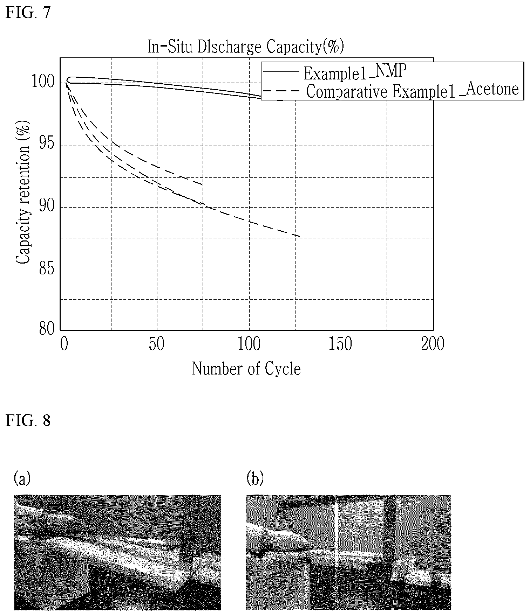

FIG. 7 is a capacity retention rate according to the number of cycles (3 cycles) of a secondary battery including a separator according to Comparative Example 1 and Example 1.

Referring to FIG. 7, it is apparent that a secondary battery including a separator according to Example 1 maintains a high capacity retention rate compared to Comparative Example 1 even when the number of cycles increases.

### [Experimental Example 8: Comparison of Cell Stiffness]

FIG. 8 is a result of comparing secondary battery cells including separators according to Comparative Example 1 and Example 1.

Referring to FIG. 8, the cell of Comparative Example 1 shown in (a) may have a problem in bending due to a lack of wet adhesion, whereas the cell of Example 1 shown in (b) has a binder (PVDF-HFP) present in the coating layer so that adhesion is implemented and maintained firmly.

While embodiments of the present invention have been shown and described, it will be understood by those of ordinary skill in the art that various changes in form and details may be made therein without departing from the spirit and scope of the present disclosure as defined by the following claims.

## Claims

1. A separator (100) for a secondary battery, the separator (100) comprising:
a porous substrate (10); and
a coating layer (20) disposed on at least one surface of the porous substrate (10),
wherein the coating layer (20) comprises polyvinylidene fluoride-co-hexafluoropropylene (PVDF-HFP) (22) and inorganic particles (21), and
wherein a lamellar thickness of the PVDF-HFP (22) in the coating layer (20) is 2.5 to 3.2 nm.

2. The separator (100) for a secondary battery according to claim 1, wherein the porous substrate (10) comprises at least one selected from the group consisting of polyolefin, polyethylene terephthalate, polybutylene terephthalate, polyacetal, polyamide, polycarbonate, polyimide, polyetheretherketone, polyethersulfone, polyphenyleneoxide, polyphenylenesulfide, and polyethylenenaphthalene.

3. The separator (100) for a secondary battery according to claim 1 or claim 2, wherein the inorganic particles (21) are inorganic particles (21) having a dielectric constant greater than or equal to 5, inorganic particles (21) having lithium-ion transport ability, or mixture of two or more thereof.

4. The separator (100) for a secondary battery according to any of the preceding claims, wherein the inorganic particles (21) are selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0 <x<1), Pb₁₋ₓLaₓZr_{1-y}Ti_{y}O₃ (PLZT, where 0 < x < 1 and 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, SiC, lithium phosphate (Li₃PO₄), lithium titanium phosphate (LiₓTi_{y}(PO₄)₃) (where 0< x < 2 and 0 < y < 3), lithium aluminum titanium phosphate (LiₓAl_{y}Ti_{z}(PO₄)₃ (where 0 < x < 2, 0 < y < 1, and 0 < z < 3), (LiAlTiP)ₓO_{y} series glass (where 0 < x < 4 and 0 < y < 13), lithium lanthanum titanate (LiₓLa_{y}TiO₃) (where 0 < x < 2 and 0 < y < 3), lithium Germanium thiophosphate (LiₓGe_{y}P_{z}S_{w}) (where 0 < x < 4, 0 < y < 1, 0 < z < 1, and 0 < w < 5), lithium nitride (LiₓN_{y}) (where 0 < x <4 and 0 < y < 2), SiS₂-based glass (LiₓSi_{y}S_{z}) (where 0 < x < 3, 0 < y < 2, and 0 < z < 4), and P₂S₅-based glass (LiₓP_{y}S_{z} ( where 0 < x < 3, 0 < y < 3, and 0 < z < 7), and a mixture of two or more thereof.

5. The separator (100) for a secondary battery according to any of the preceding claims, wherein a content of hexafluoropropylene (HFP)monomers in the PVDF-HFP (22) is 8 to 15% by weight, with respect to the total weight of the PVDF-HFP (22).

6. The separator (100) for a secondary battery according to any of the preceding claims, wherein a weight-average molecular weight (Mw) of the PVDF-HFP (22) is 300,000 to 600,000 g/mol.

7. The separator (100) for a secondary battery according to any of the preceding claims, wherein the air permeability of the secondary battery separator (100) is 160 sec/100cc or less.

8. A method for manufacturing a separator (100) for a secondary battery, the method comprising:
(S1) coating a composition for forming a coating layer (20) on at least one surface of a porous substrate (10); and
(S2) drying the composition for forming a coating layer (20) to form a coating layer (20), wherein the composition for forming a coating layer (20) comprises polyvinylidene fluoride-hexafluoropropylene copolymer (PVDF-HFP) (22), inorganic particles (21), and a solvent,
wherein
the solvent comprises a polar organic solvent having a boiling point of at least 120°C.

9. The method according to claim 8, wherein the drying in step S2 includes heating to a temperature from 100°C to 170°C for 0.5 to 1.5 hours.

10. The method according to claim 8 or 9, wherein the polar organic solvent is selected from the group consisting of 4-dimethylaminopyridine, 1-pentanol, ethylene glycol, dimethylsulfoxide, dimethylformamide, N-methyl-2-pyrrolidone, N-ethyl-2-pyrrolidone, and a mixture of two or more thereof.

11. The method according to any of the claims 8 to 10, wherein the amount of solvent in the composition for forming a coating layer (20) is 20 to 40 % by weight, based on a total weight of the composition for forming a coating layer (20).

12. A separator (100) for a secondary battery obtainable by the method according to any of the claims 8 to 11.

13. A secondary battery comprising:
a negative electrode;
a positive electrode;
a separator (100) according to any of the claims 1 to 7 and 12 arranged between the negative electrode and the positive electrode; and
an electrolyte solution.

14. A method for manufacturing a secondary battery, comprising the steps:
(S1) manufacturing an electrode assembly by sequentially stacking a positive electrode, a separator (100) according to any of the claims 1 to 7 and 12, and a negative electrode;
(S2) injecting an electrolyte solution into a battery case after loading the electrode assembly into the battery case; and
(S3) storing the battery case with the electrolyte solution injected at 55 to 65°C.

## Patentansprüche

1. Separator (100) für eine Sekundärbatterie, wobei der Separator (100) umfasst:
ein poröses Substrat (10); und
eine Beschichtungsschicht (20), die auf mindestens einer Oberfläche des porösen Substrats (10) angeordnet ist,
wobei die Beschichtungsschicht (20) Polyvinylidenfluorid-co-hexafluorpropylen (PVDF-HFP) (22) und anorganische Partikel (21) umfasst, und
wobei eine Lamellendicke des PVDF-HFP (22) in der Beschichtungsschicht (20) 2,5 bis 3,2 nm beträgt.

2. Separator (100) für eine Sekundärbatterie nach Anspruch 1, wobei das poröse Substrat (10) mindestens eines umfasst, das aus der Gruppe ausgewählt ist, die aus Polyolefin, Polyethylenterephthalat, Polybutylenterephthalat, Polyacetal, Polyamid, Polycarbonat, Polyimid, Polyetheretherketon, Polyethersulfon, Polyphenylenoxid, Polyphenylensulfid und Polyethylennaphthalin besteht.

3. Separator (100) für eine Sekundärbatterie nach Anspruch 1 oder Anspruch 2, wobei die anorganischen Partikel (21) anorganische Partikel (21) mit einer Dielektrizitätskonstante größer oder gleich 5, anorganische Partikel (21) mit Lithiumionentransportfähigkeit oder eine Mischung von zwei oder mehr davon sind.

4. Separator (100) für eine Sekundärbatterie nach einem der vorhergehenden Ansprüche, wobei die anorganischen Partikel (21) aus der Gruppe ausgewählt sind, die aus Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, wobei 0 < x < 1), Pb₁₋ₓLaxZr_{1-y}TiyO₃ (PLZT, wobei 0 < x < 1 und 0 < y < 1), (1-x)Pb(Mg_{1/3}Nb_{2/3})O₃₋ₓPbTiO₃ (PMN-PT, wobei 0 < x < 1), HfO₂, SrTiO₃, SnO₂, CeO₂, MgO, NiO, CaO, ZnO, SiC, Lithiumphosphat (Li₃PO₄), Lithiumtitanphosphat (LiₓTi_{y}(PO₄)₃) (wobei 0 < x < 2 und 0 < y < 3), Lithiumaluminiumtitanphosphat (LiₓAl_{y}Ti_{z}(PO₄)₃ (wobei 0 < x < 2, 0 < y < 1 und 0 < z < 3), Glas der (LiAlTiP)ₓO_{y}-Reihe (wobei 0 < x < 4 und 0 < y < 13), Lithiumlanthantitanat (LiₓLa_{y}TiO₃) (wobei 0 < x < 2 und 0 < y < 3), Lithiumgermaniumthiophosphat (LiₓGe_{y}P_{z}S_{w}) (wobei 0 < x < 4, 0 < y < 1, 0 < z < 1 und 0 < w < 5), Lithiumnitrid (LiₓN_{y}) (wobei 0 < x < 4 und 0 < y < 2), Glas auf SiS₂-Basis (LiₓSi_{y}S_{z}) (wobei 0 < x < 3, 0 < y < 2 und 0 < z < 4) und Glas auf P₂S₅-Basis (LiₓP_{y}S_{z} (wobei 0 < x < 3, 0 < y < 3 und 0 < z < 7) und einer Mischung von zwei oder mehr davon besteht.

5. Separator (100) für eine Sekundärbatterie nach einem der vorhergehenden Ansprüche, wobei ein Gehalt an Hexafluorpropylen (HFP)-Monomeren in dem PVDF-HFP (22) 8 bis 15 Gew.-%, bezogen auf das Gesamtgewicht des PVDF-HFP (22), beträgt.

6. Separator (100) für eine Sekundärbatterie nach einem der vorhergehenden Ansprüche, wobei ein gewichtsmittleres Molekulargewicht (Mw) des PVDF-HFP (22) 300.000 bis 600.000 g/mol beträgt.

7. Separator (100) für eine Sekundärbatterie nach einem der vorhergehenden Ansprüche, wobei die Luftdurchlässigkeit des Sekundärbatterieseparators (100) 160 s/100 cm³ oder weniger beträgt.

8. Verfahren zur Herstellung eines Separators (100) für eine Sekundärbatterie, wobei das Verfahren umfasst:
(S1) Beschichten einer Zusammensetzung zur Bildung einer Beschichtungsschicht (20) auf mindestens einer Oberfläche eines porösen Substrats (10); und
(S2) Trocknen der Zusammensetzung zur Bildung einer Beschichtungsschicht (20), um eine Beschichtungsschicht (20) zu bilden,
wobei die Zusammensetzung zur Bildung einer Beschichtungsschicht (20) Polyvinylidenfluorid-hexafluorpropylen-Copolymer (PVDF-HFP) (22), anorganische Partikel (21) und ein Lösungsmittel umfasst,
wobei
das Lösungsmittel ein polares organisches Lösungsmittel mit einem Siedepunkt von mindestens 120 °C umfasst.

9. Verfahren nach Anspruch 8, wobei das Trocknen in Schritt S2 das Erhitzen auf eine Temperatur von 100 °C bis 170 °C für 0,5 bis 1,5 Stunden umfasst.

10. Verfahren nach Anspruch 8 oder 9, wobei das polare organische Lösungsmittel aus der Gruppe ausgewählt ist, die aus 4-Dimethylaminopyridin, 1-Pentanol, Ethylenglykol, Dimethylsulfoxid, Dimethylformamid, N-Methyl-2-pyrrolidon, N-Ethyl-2-pyrrolidon und einer Mischung von zwei oder mehr davon besteht.

11. Verfahren nach einem der Ansprüche 8 bis 10, wobei die Menge an Lösungsmittel in der Zusammensetzung zur Bildung einer Beschichtungsschicht (20) 20 bis 40 Gew.-%, bezogen auf ein Gesamtgewicht der Zusammensetzung zur Bildung einer Beschichtungsschicht (20), beträgt.

12. Separator (100) für eine Sekundärbatterie, erhältlich durch das Verfahren nach einem der Ansprüche 8 bis 11.

13. Sekundärbatterie, umfassend:
eine negative Elektrode;
eine positive Elektrode;
einen Separator (100) nach einem der Ansprüche 1 bis 7 und 12, der zwischen der negativen Elektrode und der positiven Elektrode angeordnet ist; und
eine Elektrolytlösung.

14. Verfahren zur Herstellung einer Sekundärbatterie, umfassend die Schritte:
(S1) Herstellen einer Elektrodenanordnung durch sequentielles Stapeln einer positiven Elektrode, eines Separators (100) nach einem der Ansprüche 1 bis 7 und 12 und einer negativen Elektrode;
(S2) Injizieren einer Elektrolytlösung in ein Batteriegehäuse nach dem Laden der Elektrodenanordnung in das Batteriegehäuse; und
(S3) Lagern des Batteriegehäuses mit der injizierten Elektrolytlösung bei 55 bis 65 °C.

## Revendications

1. Séparateur (100) pour une batterie rechargeable, le séparateur (100) comprenant :
un substrat poreux (10) ; et
une couche de revêtement (20) disposée sur au moins une surface du substrat poreux (10),
dans lequel la couche de revêtement (20) comprend un fluorure de polyvinylidène-co-hexafluoropropylène (PVDF-HFP) (22) et des particules inorganiques (21), et
dans lequel une épaisseur lamellaire du PVDF-HFP (22) dans la couche de revêtement (20) est 2,5 à 3,2 nm.

2. Séparateur (100) pour une batterie rechargeable selon la revendication 1, dans lequel le substrat poreux (10) comprend un ou plusieurs éléments sélectionnés dans le groupe constitué de polyoléfine, polyéthylène téréphtalate, polybutylène téréphtalate, polyacétal, polyamide, polycarbonate, polyimide, polyétheréthercétone, polyéthersulfone, polyphénylène oxyde, polyphénylène sulfure et polyéthylène naphtalène.

3. Séparateur (100) pour une batterie rechargeable selon la revendication 1 ou la revendication 2, dans lequel les particules inorganiques (21) sont des particules inorganiques (21) ayant une constante diélectrique égale ou supérieure à 5, des particules inorganiques (21) ayant une capacité de transport lithium-ion, ou un mélange de deux ou plus de deux de ces dernières.

4. Séparateur (100) pour une batterie rechargeable selon l'une quelconque des revendications précédentes, dans lequel les particules inorganiques (21) sont sélectionnées dans le groupe constitué de Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, où 0 <x<1), Pb₁₋ₓLaₓZr_{1-y}Ti_{y}O₃ (PLZT, où 0 < x < 1 et 0 < y < 1), (1-x)Pb(Mg_{1/3}Nb_{2/3})O₃₋ₓPbTiO₃ (PMN-PT, où 0 < x < 1), HfO₂, SrTiO₃, SnO₂, CeO₂, MgO, NiO, CaO, ZnO, SiC, phosphate de lithium (Li₃PO₄), phosphate de lithium titane (LiₓTi_{y}(PO₄)₃) (où 0< x < 2 et 0 < y < 3), phosphate de lithium aluminium titane (LiₓAl_{y}Ti_{z}(PO₄)₃ (où 0 < x < 2, 0 < y < 1, et 0 < z < 3), verre de type (LiAlTiP)ₓO_{y} (où 0 < x < 4 et 0 < y < 13), titanate de lithium lanthane (LiₓLa_{y}TiO₃) (où 0 < x < 2 et 0 < y < 3), thiophosphate de lithium germanium (LiₓGe_{y}P_{z}S_{w}) (où 0 < x < 4, 0 < y < 1, 0 < z < 1, et 0 < w < 5), nitrure de lithium (LiₓN_{y}) (où 0 < x <4 et 0 < y < 2), verre de type SiS₂ (LiₓSi_{y}S_{z}) (où 0 < x < 3, 0 < y < 2, et 0 < z < 4) et verre à base de P₂S₅ (LiₓP_{y}S_{z} (où 0 < x < 3, 0 < y < 3, et 0 < z < 7), et un mélange de deux ou plus de deux de ces derniers.

5. Séparateur (100) pour une batterie rechargeable selon l'une quelconque des revendications précédentes, dans lequel une teneur en monomères d'hexafluoropropylène (HFP) dans le PVDF-HFP (22) est 8 à 15 % en poids, pour le poids total du PVDF-HFP (22).

6. Séparateur (100) pour une batterie rechargeable selon l'une quelconque des revendications précédentes, dans lequel un poids moléculaire moyen en poids (Mw) du PVDF-HFP (22) est 300 000 à 600 000 g/mol.

7. Séparateur (100) pour une batterie rechargeable selon l'une quelconque des revendications précédentes, dans lequel la perméabilité d'air du séparateur de batterie rechargeable (100) est égale ou inférieure à 160 s/100 cc.

8. Procédé de fabrication d'un séparateur (100) pour une batterie rechargeable, le procédé consistant à :
(S1) revêtir une composition pour former une couche de revêtement (20) sur au moins une surface d'un substrat poreux (10) ; et
(S2) sécher la composition pour former une couche de revêtement (20) pour former une couche de revêtement (20),
dans lequel la composition pour former une couche de revêtement (20) comprend un copolymère de fluorure de polyvinylidène-hexafluoropropylène (PVDF-HFP) (22), des particules inorganiques (21) et un solvant,
dans lequel
le solvant comprend un solvant organique polaire ayant un point d'ébullition égal ou supérieur à 120°C.

9. Procédé selon la revendication 8, dans lequel le séchage à l'étape S2 inclut un chauffage à une température de 100°C à 170°C pendant 0,5 à 1,5 heure.

10. Procédé selon la revendication 8 ou 9, dans lequel le solvant organique polaire est sélectionné dans le groupe constitué de 4-diméthylaminopyridine, 1-pentanol, éthylène glycol, diméthylsulfoxyde, diméthylformamide, N-méthyl-2-pyrrolidone, N-éthyl-2-pyrrolidone, et un mélange de deux ou plus de deux de ces derniers.

11. Procédé selon l'une quelconque des revendications 8 à 10, dans lequel la quantité de solvant dans la composition pour former une couche de revêtement (20) est 20 à 40 % en poids, sur la base d'un poids total de la composition pour former une couche de revêtement (20).

12. Séparateur (100) pour une batterie rechargeable pouvant être obtenu par le procédé selon l'une quelconque des revendications 8 à 11.

13. Batterie rechargeable comprenant :
une électrode négative ;
une électrode positive ;
un séparateur (100) selon l'une quelconque des revendications 1 à 7 et 12 agencé entre l'électrode négative et l'électrode positive ; et
une solution d'électrolyte.

14. Procédé de fabrication d'une batterie rechargeable, comprenant les étapes consistant à :
(S1) fabriquer un ensemble d'électrode en empilant séquentiellement une électrode positive, un séparateur (100) selon l'une quelconque des revendications 1 à 7 et 12, et une électrode négative ;
(S2) injecter une solution d'électrolyte dans un boîtier de batterie après le chargement de l'ensemble d'électrode dans le boîtier de batterie ; et
(S3) stocker le boîtier de batterie avec la solution d'électrolyte injectée à 55 à 65°C.
